# EUROPÄISCHE PATENTSCHRIFT

(11) **EP 3 438 477 B1**
(45) Veröffentlichungstag und Bekanntmachung des Hinweises auf die Patenterteilung: **07.09.2022**
(21) Anmeldenummer: 18182231.3
(22) Anmeldetag: 06.07.2018
(51) Int. Cl.: F16C 11/10, A45C 5/03, A45C 13/26, A45C 13/28

(54) **TRANSPORTBEHÄLTNIS**
TRANSPORT CONTAINER
RÉCIPIENT DE TRANSPORT

(30) Priorität: 01.08.2017 DE 202017104607 U
(43) Veröffentlichungstag der Anmeldung: 06.02.2019
(73) Patentinhaber: PARAT Solutions GmbH, 94089 Neureichenau (DE)
(72) Erfinder: Weiß, Christian, 94089 Neureichenau (DE)
(74) Vertreter: Roche, von Westernhagen & Ehresmann

(56) Entgegenhaltungen:
- WO-A2-2017/068172
- DE-A1- 19 817 077
- DE-U1- 20 204 826
- DE-U1- 20 212 024
- US-A- 5 330 037
- US-A- 5 933 917

## Beschreibung

Die Erfindung betrifft ein Transportbehältnis nach dem Oberbegriff des Anspruches 1.

Die Anmelderin entwickelt und fertigt seit Jahrzehnten Transportbehältnisse wie Koffer oder Taschen. Es kann sich dabei insbesondere um Transportbehältnisse handeln, die speziell an den Inhalt der zu transportierenden Gegenstände angepasst sind, wie beispielsweise Werkzeugkoffer, Computerkoffer etc. Die Anmelderin gehört zu den führenden Unternehmen, die derartige, speziell angepasste, Transportbehältnisse fertigt.

Transportbehältnisse umfassen in der Regel einen schalenförmigen Grundkörper, der typischerweise aus zwei oder mehr Schalenteilen besteht. Von der Erfindung sind insbesondere schalenförmige Koffer aus zwei Halbschalen umfasst.

Gleichermaßen sind von der Erfindung aber auch Transportbehältnisse umfasst, bei denen nur ein Abschnitt einer Wandung des Transportbehältnisses, z. B. das Deckelelement, verlagerbar, z. B. schwenkbar, relativ zu den übrigen Wandungsbehältnissen angeordnet ist.

Transportbehältnisse der bekannten Art weisen ein Griffelement auf, mittels dem das Transportbehältnis gegriffen und getragen, also von Hand transportiert werden kann. Es sind Transportbehältnisse bekannt, bei denen Griffelemente fest, d. h. unverlagerbar angeordnet sind. Die Erfindung bezieht sich aber nur auf solche Transportbehältnisse, bei denen das Griffelement verschwenkbar an der Deckenwand des Transportbehältnisses angeordnet ist. Bei dem erfindungsgemäßen Transportbehältnis ist das Griffelement zwischen einer Ruheposition und einer Gebrauchsposition verschwenkbar. In der Gebrauchsposition ist das Griffelement aufrecht relativ zu der Deckenwand angeordnet und erstreckt sich von dieser weg. In der Ruheposition ist das Griffelement an die Deckenwand angenähert, und erstreckt sich insbesondere im Wesentlichen parallel zu der Deckenwand. Von der Erfindung sind auch Transportbehältnisse umfasst, bei denen das Griffelement zwei Ruhepositionen einnehmen kann, und somit ausgehend von der aufrechten Gebrauchsposition entweder in die eine oder in die andere Drehrichtung hin in eine Ruheposition verlagerbar ist.

Aus der DE 19817077 A1 geht ein Tragbügel für ein Gehäuse für ein Kofferradio hervor, der an beiden Seitenwänden des Gehäuses festgelegt ist. Diese Druckschrift zeigt kein Griffelement, das an einer Deckenwand eines Transportbehältnisses schwenkbar festgelegt ist.

Aus der US 5933917 A geht ein Griffelement für eine Spannungsversorgungseinheit hervor. Wenn die Spannungsversorgungseinheit in einer Maschine installiert ist, kann das Griffelement eine Position nahe des Gehäuses einnehmen, um den erforderlichen Bauraum zu reduzieren, und um unbeabsichtigte Kollisionen zu vermeiden. Wird die Spannungsversorgungseinheit bewegt, kann das Griffelement in eine 90° Position verlagert werden, um einfach gegriffen zu werden. An dem Griffelement sind zwei nach innen vorstehende Zapfen mit Nuten angeordnet, in die hinein elastische Elemente, die einen Vorsprung aufweisen, eingreifen können. Aus der Druckschrift geht nicht hervor, dass eine Vorrichtung zur Feststellung eines Griffelementes in seiner Ruheposition und/oder zur Feststellung des Griffelementes in seiner Gebrauchsposition ein von einer Nocke eines Nockenrades bereitgestelltes Rastelement umfasst, wobei das Nockenrad drehfest an dem Griffelement angeordnet ist, und wobei eine Rastaufnahme, die mit dem Griffelement kooperiert, von einem federvorgespannten Käfig bereitgestellt ist, der jeweils eine Nocke beidseitig, insbesondere in beide Drehsinne, überfängt oder einfängt.

Aus der DE 20212024 U1 geht ein Notebookkoffer mit einem Griff hervor. Die Druckschrift zeigt kein von einer Nocke eines Nockenrades bereitgestelltes Rastelement. Die Druckschrift zeigt auch keine von einem federvorgespannten Käfig bereitgestellte Rastaufnahme, die jeweils eine Nocke beidseitig, insbesondere in beide Drehsinne, überfängt oder einfängt.

Ausgehend von dem Transportbehältnis der gattungsgemäßen, eingangs beschriebenen Art, besteht die Aufgabe der Erfindung darin, das Transportbehältnis derartig weiter zu entwickeln, dass eine komfortablere Handhabung möglich wird.

Die Erfindung löst diese Aufgabe mit den Merkmalen des Anspruches 1, insbesondere mit denen den Kennzeichenteils, und ist demgemäß dadurch gekennzeichnet, dass eine Vorrichtung zur Feststellung des Griffelementes in seiner Ruheposition und/oder zur Feststellung des Griffelementes in seiner Gebrauchsposition vorgesehen ist, wobei die Vorrichtung wenigstens ein Rastelement umfasst, welches mit wenigstens einer Rastaufnahme kooperiert, wobei das Rastelement von einer Nocke eines Nockenrades bereitgestellt ist, wobei das Nockenrad drehfest an dem Griffelement angeordnet ist, wobei die Rastaufnahme von einem federvorgespannten Käfig bereitgestellt ist, der jeweils eine Nocke beidseitig, insbesondere in beide Drehsinne, überfängt oder einfängt.

Das Prinzip der Erfindung besteht im Wesentlichen darin, dem Transportbehältnis eine Vorrichtung zur Feststellung zuzuordnen. Mit der Vorrichtung zur Feststellung kann das Griffelement in seiner Ruheposition und/oder in seiner Gebrauchsposition festgestellt werden. Wird das Griffelement von dem Benutzer aus der Ruheposition in die aufrechte Gebrauchsposition verlagert, sorgt die Vorrichtung zur Feststellung des Griffelementes dafür, dass das Griffelement in seiner aufrechten Gebrauchsposition verbleibt. Wird das Griffelement hingegen von dem Benutzer von der aufrechten Gebrauchsposition in seine flachliegende Ruheposition überführt, kann die Vorrichtung zur Feststellung dafür sorgen, dass das Griffelement in seiner Ruheposition festgestellt wird.

Die Feststellung erfolgt dabei beispielsweise derart, dass die Bedienperson zur Verlagerung des Griffelementes aus der Ruheposition in die Gebrauchsposition oder aus der Gebrauchsposition in die Ruheposition jeweils gewisse Schwellkräfte überwinden muss, um das Griffelement zu verschwenken. Diese Schwellkräfte sind so bemessen, dass sie den Benutzer bei der Bedienung nicht oder praktisch nicht beeinträchtigen. Insbesondere ist kein großer Kraftaufwand erforderlich, um eine Verlagerung des Griffelementes vorzunehmen. Andererseits sind diese Schwellkräfte ausreichend hoch, dass sie einen Halt oder eine Feststellung des Griffelementes in der gewählten Position ermöglichen, und insbesondere verhindern, dass das Griffelement unbeabsichtigt aus der Gebrauchsposition in die Ruheposition oder aus der Ruheposition in die Gebrauchsposition überführt wird.

Von Bedeutung ist darüber hinaus, dass die Erfindung ermöglicht, dass die Vorrichtung zur Feststellung wirksam wird bzw. auch entriegelbar oder in einen unwirksamen Zustand überführbar ist, ohne, dass es einer besonderen oder gesonderten Betätigung des Griffelementes oder eines gesonderten Elementes, z. B. einer Betätigung eines Entriegelungselementes, bedarf.

Dennoch ist von der Erfindung auch umfasst, wenn ein gesondertes Entriegelungselement vorgesehen ist, um die Vorrichtung zur Feststellung wirksam und/oder unwirksam zu schalten.

Die Erfindung ermöglicht gemäß einer ersten Variante, dass das Griffelement in seiner aufrechten Gebrauchsposition verbleibt. Insbesondere, wenn eine Bedienperson, z. B. ein Außendienstmitarbeiter, oder ein Monteur, im Rahmen seiner üblichen Tätigkeiten häufig das Transportbehältnis abstellen muss, aber nach kurzer Zeit wieder weiter tragen muss, ist es für die Bedienperson äußerst bequem und komfortabel, wenn das Griffelement in seiner Gebrauchsposition verbleibt, und immer leicht greifbar ist. Hier wird der Bedienperson ein höherer Komfort bereitgestellt.

Andererseits kann die Feststellvorrichtung dafür Sorge tragen, dass das in seiner Ruheposition festgestellte Griffelement in dieser Position sicher verbleibt, und z. B. in bestimmten Arbeitssituationen, die beispielsweise im Außendienst oder bei Montagearbeiten auftreten können, das Griffelement nicht von der Deckenwand des Transportbehältnisses absteht, und in einen Arbeitsbereich des Benutzers unerwünscht hineinragt.

Dabei ist insbesondere gemäß einer Variante der Erfindung ein wesentlicher Vorteil darin zu sehen, dass die Feststellvorrichtung das Griffelement in seiner Ruheposition oder in seiner Gebrauchsposition feststellt, unabhängig von der räumlichen Orientierung des Transportbehältnisses, also unabhängig davon, ob das Transportbehältnis steht, liegt, gekippt ist, sich auf einer Seitenwand stehend befindet, oder beispielsweise auch hängend positioniert ist.

Die Erfindung ermöglicht darüber hinaus einen weiteren Vorteil:
Die Feststellvorrichtung kann infolge der erzielten Feststellung des Griffelementes dafür sorgen, dass Klappergeräusche vermieden werden. Bei Transportbehältnissen des Standes der Technik kann in bestimmten Arbeits- oder Transportsituationen, beispielsweise, wenn das Transportbehältnis in einem Kofferraum eines Fahrzeuges transportiert wird, oder in einer vibrierenden Umgebung benutzt wird (wie z. B. in einem Maschinenraum) ein Anschlagen des Griffelementes an der Deckenwand des Transportbehältnisses erfolgen. Insbesondere, wenn das Transportbehältnis metallische Wandungsbereiche oder Wandungsbereiche aus anderen harten Materialien, aufweist, oder das Griffelement mittels eines z. B. metallischen Beschlages an dem Transportbehältnis festgelegt ist, können störende Klappergeräusche auftreten. Die Feststellvorrichtung kann diese unerwünschten Anschlagsbewegungen des Griffelementes an der Deckenwand des Transportbehältnisses oder an einem Beschlagelement an der Deckenwand des Transportbehältnisses vermeiden.

Im Rahmen der vorliegenden Patentanmeldung wird die Vorrichtung zur Feststellung des Griffelementes in einer Ruheposition oder zur Feststellung des Griffelements in einer Gebrauchsposition der Einfachheit halber auch als Feststellvorrichtung bezeichnet.

Gemäß der Erfindung umfasst die Feststellvorrichtung wenigstens ein Rastelement, welches mit wenigstens einer Rastaufnahme kooperiert.

Die Rastaufnahme kann beispielsweise eine an die Kontur des Rastelementes angepasste komplementäre Kontur sein.

Gemäß der Erfindung ist vorgesehen, dass das Rastelement von einer Nocke eines Nockenrades bereitgestellt ist. Hier kann vorteilhaft vorgesehen sein, dass das Nockenrad eine Mehrzahl von Nocken aufweist, wobei die Zahl der Nocken der Zahl der arretierbaren Schwenkpositionen des Griffelementes entspricht. Das Nockenrad ist drehfest mit dem Griffelement verbunden.

Weiter ist eine Rastaufnahme für die Nocke vorgesehen, die federvorgespannt ist. Die Rastaufnahme ist von einem Käfig gebildet. Der Käfig kann nach Art eines Schlittens in Wirkrichtung der Feder axial verfahrbar sein. Hierzu kann beispielsweise an einem Beschlag ein Unterbringungsfach für die verlagerbare Rastaufnahme angeordnet sein, wobei dieses Unterbringungsfach eine Bewegungsbahn nach Art einer Zwangsführung für den schlittenartigen Käfig bereitstellt.

Der Käfig fängt die Nocke im Rastzustand beidseitig ein oder überfängt oder umgreift die Nocke. Dies bedeutet, dass die Nocke insbesondere in beide Drehsinne hin von dem Käfig gefangen oder gesichert wird.

Dadurch, dass das Rastelement in Form einer Nocke drehfest mit dem Griffelement verbunden ist, wird die Nocke mit dem Griffelement mitverschwenkt. Insbesondere ist vorgesehen, dass die geometrische Schwenkachse des Griffelementes von der Längsmittelachse des Nockenrades bereitgestellt wird. Es ist vorgesehen, dass die Rastaufnahme für die Nocke von dem verfahrbaren Käfig bereitgestellt wird. Hierdurch können die Rast- und Anlageflächen, die für eine Feststellung und Lagesicherung des Griffelementes in der Gebrauchsposition bzw. in der Ruheposition sorgen, auf besonders einfache Weise dimensioniert und konstruiert und gefertigt werden. Hierdurch kann eine besonders hohe Langlebigkeit und Funktionstüchtigkeit des Elementes gewährleistet werden.

Gemäß einer vorteilhaften Ausgestaltung der Erfindung umfasst die Vorrichtung zur Feststellung des Griffelementes eine Einrichtung zur Verhinderung von Klappergeräuschen. Die Einrichtung zur Verhinderung von Klappergeräuschen kann beispielsweise Federelemente oder Spannelemente aufweisen, um insbesondere unter Zuhilfenahme entsprechender Steuerflächen eine Vorspannung des Griffelementes hin in seine Ruheposition oder hin in seine Gebrauchsposition vorzunehmen. Hierdurch kann verhindert werden, dass das Griffelement mit seiner Außenkontur an Bereiche der Deckenwand oder an Bereiche eines Beschlagelementes anschlägt, und entsprechende Anschlaggeräusche entstehen.

Gemäß einer weiteren vorteilhaften Ausgestaltung der Erfindung weist die Feststellvorrichtung ein Spannelement auf, das eine Spannkraft auf das in der Ruheposition oder in der Gebrauchsposition befindliche Griffelement ausübt. Das Spannelement kann beispielsweise von einer metallischen Feder, oder von einer Kunststofffeder, oder von einem komprimierbaren oder kompressiblen Material gebildet sein, und mittelbar oder unmittelbar eine Spannkraft auf das Griffelement ausüben. Infolge der Spannkraft wird das Griffelement in die gewollte Position hin vorgespannt.

Bei einer nicht erfindungsgemäßen Ausgestaltung umfasst die Feststellvorrichtung wenigstens ein Federelement, das das Rastelement in die Rastaufnahme hinein beaufschlagt. Das Federelement kann für die erforderliche - und ggf. auch in ihrer Höhe einstellbare - Kraft zur Beaufschlagung des Rastelementes in die Rastaufnahme hinein sorgen. Infolge dieser Beaufschlagung wird eine Kraft ausgeübt, mit der die Feststellvorrichtung das Griffelement in der gewählten Position feststellt.

Gemäß der Erfindung ist vorgesehen, dass die Vorrichtung mindestens ein Federelement aufweist, welches die Rastaufnahme hin zu dem Rastelement beaufschlagt. Hier ist insoweit eine geometrisch invertierte Anordnung getroffen: Die Rastaufnahme für das Rastelement ist bei diesem Ausführungsbeispiel federvorbelastet, d..h verlagerbar, und das Rastelement ist bei diesem Ausführungsbeispiel fest, insbesondere fest relativ zu dem Griffelement, angeordnet.

Gemäß einer weiteren vorteilhaften Ausgestaltung der Erfindung ist dem Griffelement eine Steuerkurve zugeordnet, die drehfest mit dem Griffelement verbunden ist. Die Steuerkurve kann mehrere Rastelemente umfassen. Die Zahl der Rastelemente entspricht vorzugsweise der Zahl der Positionen, in denen das Griffelement feststellbar ist.

Für den Fall, dass die Steuerkurve dem Griffelement zugeordnet ist, und Rastelemente aufweist, ist vorteilhafter Weise vorgesehen, dass eine entsprechende, mit der Steuerkurve und den Rastelementen kooperierende Rastaufnahme an dem Transportbehältnis oder relativ zu dem Transportbehältnis, insbesondere fest an dem Transportbehältnis, angeordnet ist.

Gemäß einer weiteren vorteilhaften Ausgestaltung der Erfindung ist das Griffelement mittels eines Beschlages an der Deckenwand des Transportbehältnisses festgelegt. Dabei bietet sich insbesondere die Möglichkeit, das Rastelement und eine Feder für das Rastelement unmittelbar an dem Beschlag anzuordnen. Der Beschlag kann auf herkömmliche Weise an der Deckenwand des Transportbehältnisses befestigt werden. Hierdurch kann auf herkömmliche Befestigungsverfahren und - jedenfalls ihrer Grundform nach - herkömmliche Beschläge zurückgegriffen werden.

Das Griffelement, der Beschlag, und die Feststellvorrichtung können eine vorkonfektionierte Einheit, insbesondere eine Handhabungseinheit, bilden, die insgesamt an der entsprechenden Wandung des Transportbehältnisses, insbesondere an der Deckenwand des Transportbehältnisses, befestigt wird.

Gemäß einer weiteren vorteilhaften Ausgestaltung der Erfindung können das Griffelement und die Vorrichtung zur Feststellung des Griffelementes symmetrisch zu einer Längsmittelachse des Griffelementes ausgebildet sein. Mithin kann vorgesehen sein, dass beispielsweise bei einer U-förmigen Ausbildung des Griffelementes beide kurzen U-Schenkel des Griffelementes jeweils mit einer eigenen Vorrichtung zur Feststellung des Griffelementes kooperieren, mithin zwei derartiger Vorrichtungen spiegelsymmetrisch vorgesehen sind.

Weitere Vorteile ergeben sich aus den nicht zitierten Unteransprüchen, sowie anhand der nachfolgenden Beschreibung der in den Zeichnungen dargestellten Ausführungsbeispiele.

Darin zeigen:
- Fig. 1: in einer schematischen, teilgeschnittenen Ansicht ein nicht erfindungsgemäßes Transportbehältnis mit einem Griffelement in einer aufrechten Gebrauchsposition,
- Fig. 2: in einer teilgeschnitten, schematischen Ansicht etwa gemäß Ansichtspfeil II in Fig. 1 das Transportbehältnis mit dem Griffelement in seiner Gebrauchsposition, wobei zusätzlich zwei Ruhepositionen des Griffelementes gestrichelt dargestellt sind,
- Fig. 3: in einer teilgeschnittenen, schematischen, vergrößerten Einzelansicht gemäß Teilkreis III in Fig. 1 den Anbindungsbereich eines Schenkels des Griffelementes an einen Beschlag sowie die Feststellvorrichtung, mit angedeutetem, von einem Federelement vorgespannten Rastelement,
- Fig. 4: etwa entlang Ansichtspfeil IV in Fig. 3 in Einzeldarstellung die Kontur des Griffelementes mit angedeuteter, gestrichelt dargestellter Steuerkurve mit drei Rastaufnahmen,
- Fig. 5: in einer teilgeschnittenen Ansicht etwa entlang Schnittlinie V-V in Fig. 3 die Feststellvorrichtung unter schematischer Veranschaulichung des Zusammenspiels von Rastelement und Steuerkurve,
- Fig. 6: eine nicht erfindungsgemäße Feststellvorrichtung in einer Darstellung gemäß Fig. 3, wobei hier die Richtung der Kraftausübung des Kugelrastelementes im Vergleich zu dem Ausführungsbeispiel der Fig. 3 um 90° gedreht ist,
- Fig. 7: in einer schematischen Einzeldarstellung etwa gemäß Ansichtspfeil VII in Fig. 6 das Griffelement zur Veranschaulichung der Rastaufnahmen,
- Fig. 8: in einer schematischen, teilgeschnittenen Ansicht den Anbindungsbereich des Griffelementes an dem Beschlag und die Feststellvorrichtung etwa entlang Schnittlinie VIII - VIII in Fig. 6,
- Fig. 9: ein Ausführungsbeispiel einer erfindungsgemäßen Vorrichtung in einer teilgeschnittenen schematischen Ansicht, ähnlich der Darstellung der Fig. 3, wobei hier drehfest mit dem Griffelement verbunden ein Nockenrad angeordnet ist, und eine gegenüber der Deckenwand des Transportbehältnisses federvorgespannte Käfiganordnung mit einer Rastaufnahme vorgesehen ist,
- Fig. 10: in einer vergrößerten schematischen, teilgeschnittenen Detaildarstellung den Verbindungsbereich bzw. Zusammenwirkungsbereich von Nockenelement und Käfig gemäß Teilkreis X in Fig. 9,
- Fig. 11: in einer schematischen, teilgeschnittenen Detailansicht unter Weglassung zahlreicher Einzelteile zur Illustration des Zusammenwirkens von Nockenrad mit Rastaufnahme, den Zusammenwirkungsbereich von Nocke und Rastaufnahme, in einer Darstellung etwa entlang der Schnittlinie XI-XI in Fig. 9, wobei der Beschlag und die Deckenwand des Transportbehältnisses der Einfachheit halber weggelassen sind, und
- Fig. 12: den Zusammenwirkbereich zwischen Nockenrad und Käfig in einer teilgeschnittenen schematischen Ansicht etwa entlang einer Schnittlinie XII-XII in Fig. 9 unter Darstellung eines Teils eines Beschlages.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich.

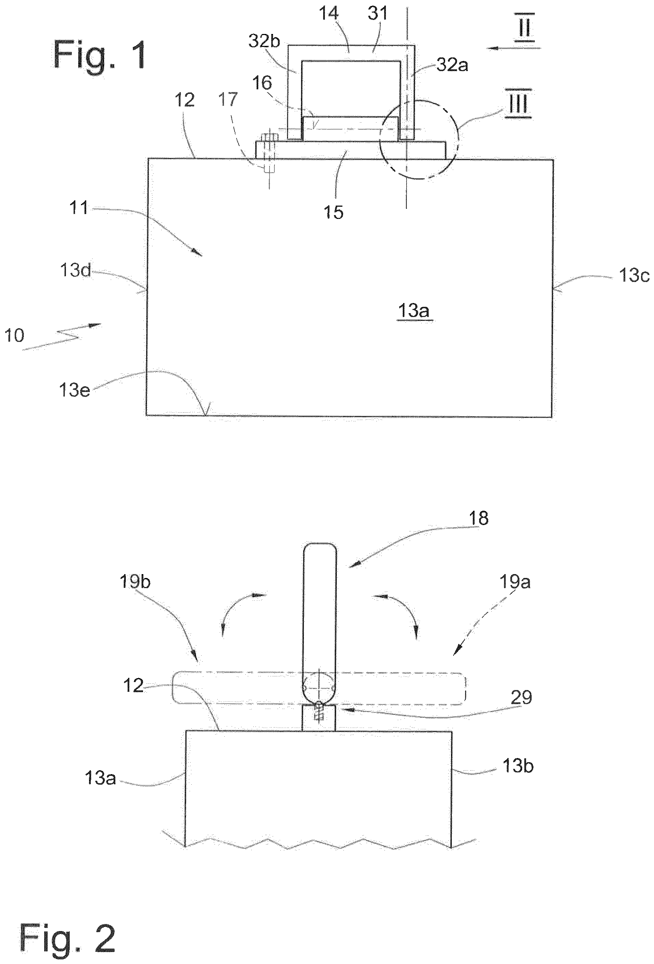

Das Transportbehältnis ist gemäß der Darstellung des Ausführungsbeispiels der Fig. 1 in seiner Gesamtheit mit 10 bezeichnet. Es kann, wie dargestellt, nach Art eines formstabilen Koffers ausgebildet sein, der eine Deckenwand 12 und vier Seitenwände 13a, 13b, 13c, 13d aufweist.

Die Seitenwände 13a, 13b, 13c, 13d bilden gemeinsam mit einer Bodenwand 13e und der Deckenwand 12 einen hohlen Innenraum 11, in dem Gegenstände, z. B. Werkzeug, aufbewahrt werden können.

In dem Innenraum 11 des Transportbehältnisses 10 können beispielsweise nicht dargestellte Trennwände bestimmte Kompartimente für die unterzubringenden Gegenstände bereitstellen. Auch können Positionier- oder Haltevorrichtungen für die zu transportierenden Gegenstände vorgesehen sein.

Das als Koffer ausgebildete Transportbehältnis 10 kann beispielsweise von zwei Halbschalen gebildet sein. Von der Erfindung sind auch Transportbehältnisse umfasst, bei denen die Deckenwand 12 relativ zu den übrigen Wandungsteilen verlagerbar ausgebildet ist.

An der Deckenwand 12 ist um eine geometrische Achse 16 schwenkbar ein Griffelement 14 festgelegt. Das Griffelement 14 ist im Wesentlichen U-förmig ausgebildet, und weist ausweislich Fig. 1 in herkömmlicher Ausbildung einen horizontalen Schenkel 31 und zwei vertikal verlaufende Schenkel 32a, 32b auf.

Das Griffelement 14 ist unter Zuhilfenahme eines Beschlags 15 an der Deckenwand 12 festgelegt. Der Beschlag kann beispielsweise mittels einer oder mehrerer Befestigungselemente, z. B. einer schematisch angedeuteten Schraube 17, an der Deckenwand 12 festgeschraubt sein.

Die Art der Festlegung ist natürlich abhängig von dem Material der Deckenwand 12:
Es kann sich bei dem Material der Deckenwand 12 bzw. der übrigen Wandungen 13a, 13b, 13c, 13d, 13e des Transportbehältnisses 10 um Materialien wie Metall, insbesondere Aluminium, Kunststoff, Leder, textile Werkstoffe, Kunststoffe etc., oder Mischungen oder Kombinationen daraus, handeln.

Das Griffelement 14 ist zwischen einer in Fig. 1 dargestellten aufrechten Gebrauchsposition 18 und einer bzw. zwei in Fig. 2 gestrichelt angedeuteten Ruhepositionen 19a 19b verlagerbar. In der jeweiligen Ruheposition ist das Griffelement 14 im Wesentlichen parallel zu der Erstreckungsebene der Deckenwand 12 angeordnet und an diese angenähert. In der aufrechten Gebrauchsposition 18 erstreckt sich das Griffelement 14 im Wesentlichen senkrecht von der Deckenwand 12 weg.

Gemäß der Erfindung ist eine Feststellvorrichtung 29 vorgesehen, die der Feststellung des Griffelementes 14 in der jeweils gewählten Position dient. Die Feststellvorrichtung 29 umfasst zugleich eine Einrichtung 30 zur Verhinderung eines Auftretens von Klappergeräuschen.

Bei sämtlichen Ausführungsbeispielen ist die Feststellvorrichtung 29 und die Einrichtung 30 zur Verhinderung von Klappergeräuschen von den selben Bauelementen gebildet. Bei weiteren Ausführungsbeispielen der Erfindung, die in den Figuren nicht dargestellt sind, ist die Einrichtung 30 zur Verhinderung von Klappergeräuschen von anderen Elementen gebildet, als die jeweilige Feststellvorrichtung 29.

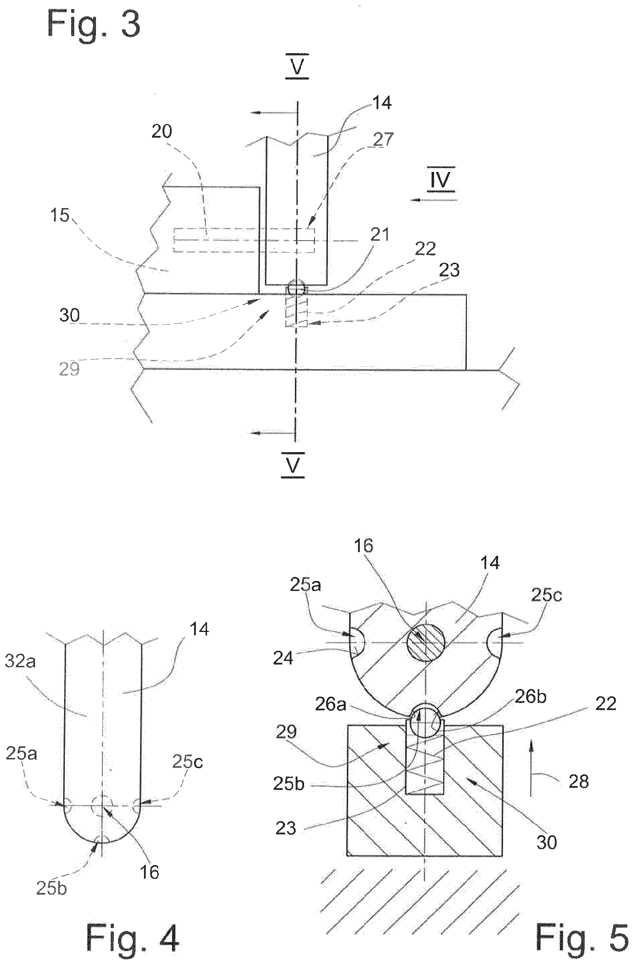

Die Feststellvorrichtung 29 und die Einrichtung 30 sollen nun zunächst unter Darlegung der Figuren 3 bis 5 anhand dieses Ausführungsbeispiels erläutert werden:
Bei diesem Ausführungsbeispiel, welches nicht Gegenstand der vorliegenden Erfindung ist, ist das Griffelement 14 über eine Drehachse 20 an dem Beschlag 15 drehbar gelagert. Hierzu kann eine Drehachse 20 in eine Lageraufnahme oder Bolzenaufnahme 27 an dem Griffelement 14 hineinragen. Das Griffelement ist schwenkbar aber unverlierbar an dem Beschlag 15 drehgelagert.

An dem Griffelement 14 ist eine - am besten in Fig. 5 erkennbare - Steuerkurve 24 angeordnet, die drei Rastaufnahmen 25a, 25b, 25c aufweist. Die Rastaufnahmen 25a, 25b, 25c weisen seitliche Flanken 26a, 26b auf. An dem Beschlag 15 ist - der Steuerkurve 24 gegenüberliegend - ein Rastelement 21 in Form einer Kugel vorgesehen. Die Kugel ist über eine Feder oder Vorspannfeder 22 ständig auf die Steuerkurve 24 hin vorbelastet. Die Feder 22 ist in einer Federaufnahme 23 untergebracht.

Dabei kann auf herkömmliche, an sich bekannte Mechanismen, zurückgegriffen werden. So kann beispielsweise auch eine in den Figuren nicht dargestellte Einrichtung vorgesehen sein, die verhindert, dass die Kugel 21 in Gänze aus der Federaufnahme 23 heraustreten kann.

Das Rastelement ist ständig auf die Steuerkurve 24 hin vorgespannt. Die Steuerkurve 24 ist drehfest mit dem Griffelement 14 verbunden. Eine Verschwenkung des Griffelementes 14 hat zugleich eine Verschwenkung der Steuerkurve 24 zur Folge, wobei infolge einer solchen Verschwenkung des Griffelementes das vorgespannte Rastelement 21 die Steuerkurve 24 entlang fährt.

Ausweislich der Position des Griffelementes 14 gemäß Fig. 5 befindet sich das Griffelement 14 in Gebrauchsposition. Hier greift das Rastelement 21 in die Rastaufnahme 25b ein. Die Rastaufnahme 25b ist dabei derartig konstruiert, dass aufgrund der Ausbildung der Flanken 26a, 26b der Aufnahme 25b das Griffelement 14 in diese Gebrauchsposition hin vorgespannt ist. Anders ausgedrückt wird das Kugelrastelement 21 durch die Ausbildung der Flanken 26a und 26b etwa mittig in der Rastaufnahme 25b zentriert.

Um das Griffelement 14 aus seiner Gebrauchsposition 18 gemäß Fig. 5 herauszubewegen, also entweder durch eine relative Drehung des Griffelementes 14 um die geometrische Drehachse 16 im Uhrzeigersinn, oder entgegen dem Uhrzeigersinn zu drehen, muss die jeweilige Flanke 26a, 26b an dem Kugelrastelement 21 vorbei bewegt werden. Hierbei wird die Kugel 21 entgegen der Kraft der Feder 22 einwärts, geringfügig in die Federaufnahme 23, hinein gedrückt. Eine Verschwenkung des Griffelementes 14 kann insoweit immer nur gegen die Kraft der Feder 22 erfolgen. Hierdurch wird das Griffelement 14 in der Gebrauchsposition 18 festgestellt.

Zugleich verhindert die Ausbildung der Flanken 26a, 26b Klappergeräusche bei in Gebrauchsposition befindlichem Griffelement 14. Es erfolgt nämlich durch die symmetrische und schräg zulaufende Ausgestaltung der Flanken 26a, 26b eine Zentrierung des Griffelementes 14 hin in die in Fig. 5 dargestellte Gebrauchsposition.

Die Vorrichtung 29 zur Feststellung des Griffelementes 14 bildet also bei diesem Ausführungsbeispiel zugleich eine Einrichtung 30 zur Verhinderung des Klapperns aus.

Bei dem Ausführungsbeispiel der Figuren 1 bis 5 ist die Kraftrichtung 28, entlang derer das Rastelement 21 durch die Feder 22 auf die Steuerkurve 24 hin vorgespannt wird, auf die geometrische Drehachse 16 hin gerichtet. Hier greift das Rastelement 21 also radial, bezogen auf die Drehachse 16, an dem Griffelement 14 an.

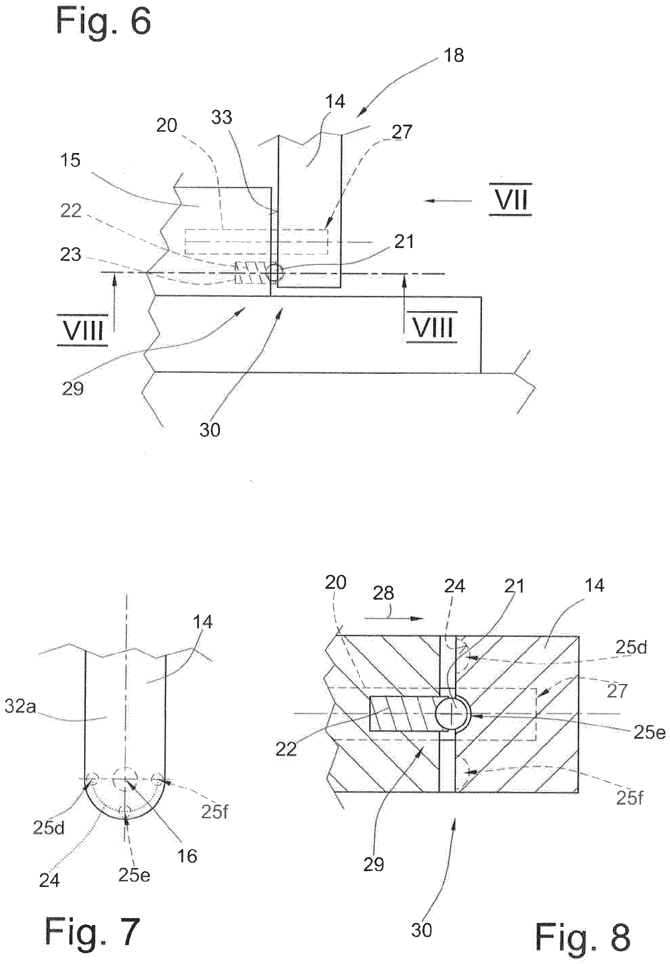

Bei dem zweiten Ausführungsbeispiel der Figuren 6 bis 8 ist die Kraftausübungsrichtung 28 hingegen parallel zur Drehachse 16 ausgerichtet. Auf die Kraftrichtung kommt es insoweit nicht an.

Bei dem nicht erfindungsgemäßen Ausführungsbeispiel der Figuren 6 bis 8 ist die Steuerkurve 24 auf der dem Beschlag 15 zugewandten Seite 33 des Griffelementes 14 angeordnet. Hier umfasst die Steuerkurve 24 (vgl. Fig. 7) ebenfalls drei Rastaufnahmen (25d, 25e, 25f), die nach Art eines Kugelkappenschnittes als gewölbte Aufnahmen in der Seite 33 des Griffelementes 14 eingearbeitet sind. Auch hier ist die Kugel 21 ständig auf die Steuerkurve 24 hin vorgespannt.

Im übrigen sei angemerkt, dass die Zeichnungen lediglich schematisch zu verstehen sind: Insbesondere die Figuren 5 und 8 zeigen jeweils Freiräume zwischen den jeweiligen Rastaufnahme 25b, 25e und der Kugel 21, wobei derartige Freiräume tatsächlich nicht auftreten müssen, sondern gemäß der Erfindung hier auch ein Kontakt erreicht werden kann.

Aus den Ausführungsbeispielen in den Zeichnungen wird deutlich, dass die Steuerkurve 24 jeweils an dem Griffelement 14 angeordnet ist, und das Rastelement 21 an dem Beschlag 15 gelagert ist. Von der Erfindung sind aber auch geometrisch umgekehrte Anordnungen umfasst, bei denen eine Steuerkurve 24 an dem Beschlag 15 und das Rastelement 21 jeweils an dem Griffelement 14 gelagert ist.

Beschrieben wird anhand des Ausführungsbeispiels der Fig. 3 und 5 die Gebrauchsposition 18 des Griffelementes 14. Wie sich aus Fig. 5 ergibt, weist die Steuerkurve noch zwei weitere Rastaufnahmen 25a, 25c auf. Diese Rastaufnahmen dienen der Festlegung des Griffelementes 14 in der jeweiligen Ruheposition 19a, 19b.

Auch bei dem Ausführungsbeispiel der Figuren 6 bis 8 wird die Gebrauchspositionen 18 des Griffelementes 14 beschrieben. Auch bei diesem Ausführungsbeispiel ist deutlich, dass die zusätzlich dargestellten Rastaufnahmen 25a und 25c einer Festlegung des Griffelementes 14 in jeweils einer Ruheposition dienen.

Von der Erfindung sind auch Transportbehältnisse umfasst, bei denen das Griffelement 14 nur in zwei Positionen, also explizit nur in einer Gebrauchsposition und in einer Ruheposition, festlegbar ist.

Von der Erfindung sind aber auch Ausführungsformen umfasst, bei denen das Griffelement 14 in mehr als drei Positionen festlegbar ist.

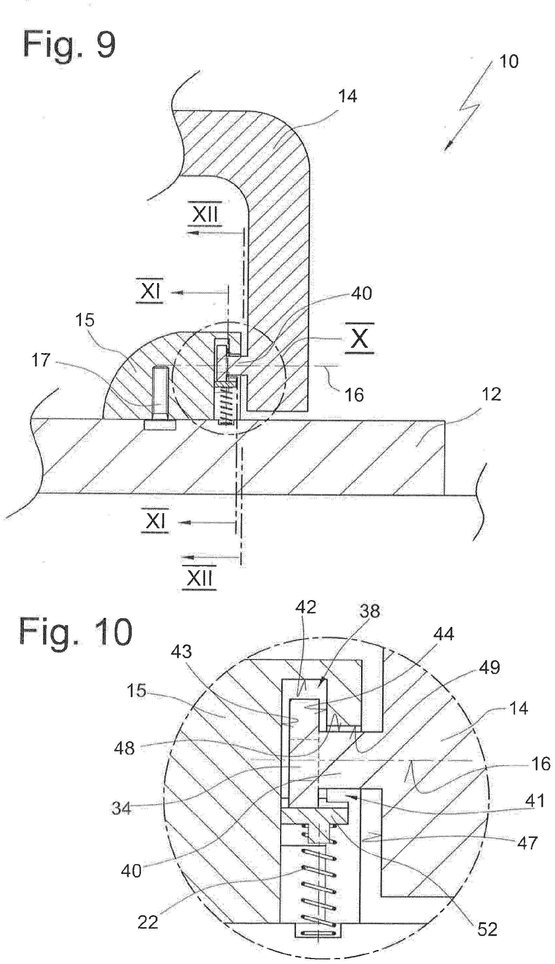

Anhand des Ausführungsbeispiels der Figuren 9 bis 12 soll eine erfindungsgemäße Variante illustriert werden:
Ausweislich Fig. 9 ist an der Deckenwand 12 des Transportbehältnisses 10 ein Beschlag 15 unter Zuhilfenahme einer Schraube 17 festgeschraubt. Der Beschlag weist ein Fach 38 auf, welches von einer Bodenwand 42, einer Rückwand 43 und einer demgegenüber kurz gehaltenen Vorderwand 44 begrenzt wird (vgl. Fig. 10).

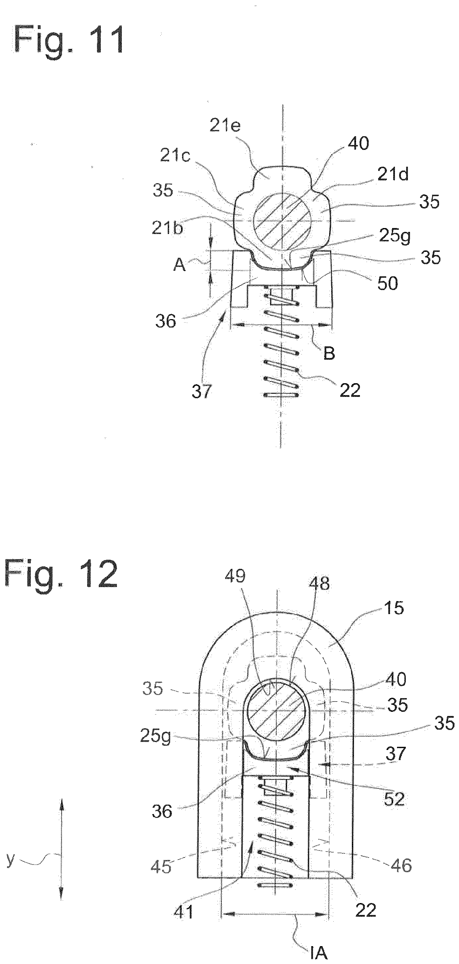

Eine linke Grenzwand 45 und eine rechte Grenzwand 46 sind darüber hinaus in Fig. 12 erkennbar.

Das Fach 38 ist - bei Betrachtung eines montierten Zustandes des Beschlages 15 - zur Deckenwand 12 des Behältnisses 10 hin offen und weist im montierten Zustand einen in Fig. 12 erkennbaren Schlitz 41 auf, durch den hindurch sich das Fach 38 im montierten Zustand zu der Innenfläche 47 des Griffelementes 14 hin öffnet.

An dem Griffelement 14 ist ein Nockenrad 34 angeordnet, welches - wie am besten in Fig. 11 erkennbar - vier Nocken 21b, 21c, 21d, 21e aufweist, (die auch mit 35 bezeichnet sind). Auf die Nocke 21e kommt es im Weiteren aber nicht an.

Die drei Nocken 21b, 21c und 21d stellen im Zusammenwirken mit einer Rastaufnahme 25g unterschiedliche, festgestellte und gesicherte Schwenkpositionen des Griffelementes 14 bereit.

Das Nockenrad 34 ist über eine Achszapfen 40 unmittelbar mit dem Griffelement 14 verbunden und damit drehfest oder drehschlüssig an dem Griffelement 14 angeordnet.

In einem Vormontagezustand kann das Nockenrad 34 von der bezüglich Fig. 9 unteren Seite des Faches 38 her in dieses eingesetzt werden, wobei der Achszapfen 40 den Schlitz 41 durchgreift.

Ausweislich der Montageposition gemäß den Fig. 10 und 12 ist erkennbar, dass der Achszapfen 40 mit seiner Außenumfangsfläche 48 an der inneren Umfangsfläche 49 des Schlitzes 41, insbesondere an dessen Grund, angreift oder der Innenumfangsfläche 49 unmittelbar benachbart angeordnet ist.

In dem Fach 38 ist ein Käfig 36 angeordnet, der die Rastaufnahme 25g bereitstellt. Der Käfig 36 ist nach Art eines Schlittens 37 in Richtung des Doppelpfeils y innerhalb des Faches 38 verfahrbar. Der Käfig 37 ist insoweit von der Feder 22 in seine Rastposition hin vorgespannt, derart, dass die Rastaufnahme 25g die Außenumfangsfläche 50 der Nocke 21b kontaktiert.

Die Nocke 21b des Nockenrades 34, und gleichermaßen auch die weiteren Nocken 21c und 21d des Nockenrades 34 weisen jeweils eine Kontur auf, die stetig gekrümmt ist, aber von einer Kreiskontur abweicht. Insbesondere weist jede Nocke 21b, 21c, 21d eine im Querschnitt im wesentlichen wannenartige Kontur auf, mit einem relativ breit gehaltenen abgeflachten, allenfalls geringfügig nach außen gewölbten Mittenbereich und zwei relativ kurz gehaltenen, steil aber stetig gekrümmt ansteigenden Seitenwandbereichen.

Gleichermaßen ist der Käfig 36 mit einer Kontur an seiner Rastaufnahme 25g versehen, die einen breit gehaltenen und abgeflachten, allenfalls geringfügig gewölbten Mittenbereich vorsieht und zwei steile seitliche Flanken.

Insgesamt macht Fig. 11 deutlich, dass hier ein sattes Anliegen der Außenumfangsfläche 50 der Nocke 21b in der Rastaufnahme 25g erfolgt.

Durch diese besondere Kontur des Käfigs 36 wird die Nocke 21b regelrecht gefangen. Insbesondere ist im breit gehaltenen Mittelbereich ein sattes flächiges Anliegen - infolge der Federvorspannung 22 des Käfigs 36 - an der Nocke erreicht. Zum anderen wird durch die beiden, sich entlang eines Axialbereiches A überdeckenden Flächenabschnitte von Rastaufnahme 25g und Nocke 21b eine automatische Zentrierung und damit eine sichere Feststellung und eine sichere Geräuschdämmung erreicht.

Die Konturen von Rastaufnahme 25g und Nocke 21b können vorteilhafter Weise aufgrund der großen Dimensionierung sehr exakt vorherbestimmt und gewählt und gefertigt werden, so dass die Feststellung und Ruhigstellung in besonderem Maße erreichbar ist.

Der Käfig 36 weist einen innerhalb des Faches 38 angeordneten Abschnitt auf, dessen Außenabmessungen im Wesentlichen den Innenabmessungen des Faches 38 entsprechen: So ist beispielsweise die Breite B des Käfigs 36, wie aus Fig. 11 ersichtlich, allenfalls geringfügig kleiner als der Innenabstand IA der Grenzwände oder Führungsflächen 45 und 46 des Faches 38. Darüber hinaus ist der Käfig 36 aber mit einem Auskragungsabschnitt 52 (Fig. 10) versehen, mit dem er den Schlitz 41 durchgreift und aus dem Fach 38 nach außen, hin zu dem Griffelement 14, vorsteht.

Die geometrische Drehachse 16 des Griffelementes 14 wird bei dem Ausführungsbeispiel von der Mittellängsachse des Nockenrades 34 bereitgestellt.

Bei den Ausführungsformen der Figuren 9-12 sind - über den dargestellten Käfig 36 hinaus - keine weiteren Lagerstellen erforderlich. Das Griffelement 14 wird beidseitig von dem Käfig 36 bzw. von der Rastaufnahme 25g drehsicher gelagert.

## Patentansprüche

1. Transportbehältnis (10), wie Koffer oder Tasche, umfassend ein an einer Deckenwand (12) des Transportbehältnisses schwenkbar festgelegtes Griffelement (14) für einen handgetragenen Transport des Transportbehältnisses, wobei das Griffelement zwischen wenigstens einer an die Deckenwand angenäherten Ruheposition (19a, 19b) und einer aufrechten Gebrauchsposition (18) verschwenkbar ist, **dadurch gekennzeichnet, dass** eine Vorrichtung (29) zur Feststellung des Griffelementes in seiner Ruheposition und/oder zur Feststellung des Griffelementes in seiner Gebrauchsposition vorgesehen ist, wobei die Vorrichtung wenigstens ein Rastelement (21, 21b, 21c, 21d) umfasst, welches mit wenigstens einer Rastaufnahme (25g) kooperiert, wobei das Rastelement (21b) von einer Nocke (35) eines Nockenrades (34) bereitgestellt ist, wobei das Nockenrad (34) drehfest an dem Griffelement (14) angeordnet ist, wobei die Rastaufnahme (25g) von einem federvorgespannten Käfig (36) bereitgestellt ist, der jeweils eine Nocke (21b, 35) beidseitig, insbesondere in beide Drehsinne, überfängt oder einfängt.

2. Transportbehältnis nach Anspruch 1, **dadurch gekennzeichnet, dass** die Vorrichtung (29) eine Einrichtung (30) zur Verhinderung von Klappergeräuschen umfasst.

3. Transportbehältnis nach Anspruch 1 oder 2, **dadurch gekennzeichnet, dass** die Vorrichtung (29) ein Spannelement (22) aufweist, das eine Spannkraft auf das in der Ruheposition oder in der Gebrauchsposition befindliche Griffelement ausübt.

4. Transportbehältnis nach einem der vorangegangenen Ansprüche, **dadurch gekennzeichnet, dass** die Vorrichtung (29) mindestens ein Federelement (22) aufweist, welches die Rastaufnahme (25g) hin zu dem Rastelement (21b, 35) beaufschlagt.

5. Transportbehältnis nach einem der vorangegangenen Ansprüche, **dadurch gekennzeichnet, dass** dem Griffelement (14) eine Steuerkurve (24) zugeordnet ist, die drehfest mit dem Griffelement verbunden ist.

6. Transportbehältnis nach Anspruch 5, **dadurch gekennzeichnet, dass** die Steuerkurve mehrere Rastelemente (21b, 21c, 21d, 35) umfasst.

7. Transportbehältnis nach einem der vorangegangenen Ansprüche, **dadurch gekennzeichnet, dass** das Griffelement (14) mittels eines Beschlages (15) an der Deckenwand (12) festgelegt ist.

8. Transportbehältnis nach einem der vorangegangen Ansprüche, **dadurch gekennzeichnet, dass** das Nockenrad (34) mehrere Nocken (21b, 21c, 21d, 35) aufweist.

9. Transportbehältnis nach einem der vorangegangenen Ansprüche, **dadurch gekennzeichnet, dass** der Käfig (36) von in einem, insbesondere innerhalb eines Beschlages (15), verfahrbaren Schlitten (37) bereitgestellt ist.

## Claims

1. Transport container (10), such as a suitcase or bag, comprising a gripping element (14) pivotably fixed on a covering wall (12) of the transport container for transporting the transport container by hand, wherein the gripping element can be pivoted between at least one rest position (19a, 19b) close to the covering wall and an upright usage position (18), **characterised in that** a device (29) is provided for fixing the gripping element in its rest position and/or for fixing the gripping element in its usage position, wherein the device comprises at least one latching element (21, 21b, 21c, 21d) which cooperates with at least one latching receiver (25g), wherein the latching element (21b) is provided by a cam (35) of a camwheel (34), wherein the camwheel (34) is arranged non-rotationally on the gripping element (14), wherein the latching receiver (25g) is provided by a spring pre-tensioned cage (36) which respectively overlays or captures a cam (21b, 35) on both sides, in particular in both directions of rotation.

2. Transport container according to claim 1, **characterised in that** the device (29) comprises apparatus (30) for preventing rattling sounds.

3. Transport container according to claim 1 or 2, **characterised in that** the device (29) has a tensioning element (22) which exerts a tensioning force on the gripping element in the rest position or in the usage position.

4. Transport container according to one of the preceding claims, **characterised in that** the device (29) has at least one spring element (22) which impinges the latching receiver (25g) towards the latching element (21b, 35).

5. Transport container according to one of the preceding claims, **characterised in that** a control curve (24) is allocated to the gripping element (14), said control curve being non-rotationally connected to the gripping element.

6. Transport container according to claim 5, **characterised in that** the control curve comprises several latching elements (21b, 21c, 21d, 35).

7. Transport container according to one of the preceding claims, **characterised in that** the gripping element (14) is fixed on the covering wall (12) by means of a clasp (15).

8. Transport container according to one of the preceding claims, **characterised in that** the camwheel (34) has several cams (21b, 21c, 21d, 35).

9. Transport container according to one of the preceding claims, **characterised in that** the cage (36) is provided by carriages (37) that can be shifted in a clasp (15), in particular inside a clasp.

## Revendications

1. Récipient de transport (10) tel qu'une valise ou un sac, comprenant un élément de poignée (14) fixé de manière pivotante à une paroi supérieure (12) du récipient de transport pour transporter à la main le récipient de transport, l'élément de poignée pouvant pivoter entre une position de repos (19a, 19b) proche de la paroi supérieure et une position d'utilisation (18) verticale, **caractérisé en ce qu'**il est prévu un dispositif (29) pour immobiliser l'élément de poignée dans sa position de repos et/ou pour immobiliser l'élément de poignée dans sa position d'utilisation, ce dispositif comprenant au moins un élément de verrouillage (21, 21b, 21c, 21d) qui coopère avec au moins un logement de verrouillage (25g), l'élément de verrouillage (21b) étant constitué par une came (35) d'une roue à cames (34), la roue à cames (34) étant disposée de façon solidaire en rotation sur l'élément de poignée (14), le logement de verrouillage (25g) étant constitué par une cage sollicitée par ressort (36) qui recouvre ou retient une came (21b, 35) des deux côtés, en particulier dans les deux sens de rotation.

2. Récipient de transport selon la revendication 1, **caractérisé en ce que** le dispositif (29) comprend un système (30) pour éviter les bruits de cliquetis.

3. Récipient de transport selon la revendication 1 ou 2, **caractérisé en ce que** le dispositif (29) comporte un élément de tension (22) qui exerce une force de tension sur l'élément de poignée en position de repos ou en position d'utilisation.

4. Récipient de transport selon une des revendications précédentes, **caractérisé en ce que** le dispositif (29) comprend au moins un élément de ressort (22) qui applique le logement de verrouillage (25g) sur l'élément de verrouillage (21b, 35).

5. Récipient de transport selon une des revendications précédentes, **caractérisé en ce qu'**à l'élément de poignée (14) est associée une came de commande (24) qui est reliée de façon solidaire en rotation à l'élément de poignée.

6. Récipient de transport selon la revendication 5, **caractérisé en ce que** la came de commande comprend plusieurs éléments de verrouillage (21b, 21c, 21d, 35).

7. Récipient de transport selon une des revendications précédentes, **caractérisé en ce que** l'élément de poignée (14) est fixé au moyen d'une ferrure (15) à la paroi supérieure (12).

8. Récipient de transport selon une des revendications précédentes, **caractérisé en ce que** la roue à cames (34) comporte plusieurs cames (21b, 21c, 21d, 35)

9. Récipient de transport selon une des revendications précédentes, **caractérisé en ce que** la cage (36) est constituée par une glissière (37) pouvant se déplacer dans, en particulier à l'intérieur d'une ferrure (15).
